# DEMANDE DE BREVET EUROPEEN

(11) **EP 1 431 654 A1**
(43) Date de publication de la demande: **23.06.2004**
(21) Numéro de dépôt: 03293163.6
(22) Date de dépôt: 16.12.2003
(51) Int. Cl.: F21S 8/12, F21V 14/08, F21W 101/10

(54) **Projecteur de véhicule automobile assurant au moins deux fonctions**

(30) Priorité: 20.12.2002 FR 0216428
(71) Demandeur: VALEO VISION, 93012 Bobigny Cédex (FR)
(72) Inventeur: Bos, Patrice, 93500 Pantin (FR); Pauty, Etienne, 75019 Paris (FR)

(57) **Abrégé**

L'invention concerne un projecteur de véhicule automobile comprenant un réflecteur (R) pour être orienté suivant l'axe longitudinal du véhicule, et une source lumineuse (S) située au voisinage du foyer du réflecteur, et au moins un filtre (1) pouvant occuper une première position effacée, où il n'intervient pas sur le faisceau lumineux, et une deuxième position active dans laquelle il intervient sur au moins une partie du faisceau, des moyens de déplacement (D) étant prévus pour faire passer le filtre de la position active à la position effacée ou inversement. Le filtre (1) est un filtre diffusant et absorbant qui ne modifie pas sensiblement les longueurs d'onde de la lumière émergente par rapport à la lumière incidente, et qui est prévu pour que, dans sa position active, un deuxième type de faisceau lumineux soit produit dont l'intensité est réduite et, éventuellement, la répartition photométrique est modifiée.

## Description

L'invention est relative à un projecteur de véhicule automobile du genre de ceux qui comprennent un réflecteur orienté suivant l'axe longitudinal du véhicule, et une source lumineuse située au voisinage du foyer du réflecteur de manière à produire un faisceau lumineux de type route, ou de croisement, lorsque la source est allumée, et au moins un filtre pouvant occuper une première position effacée, où il n'intervient pas sur le faisceau lumineux, et une deuxième position active dans laquelle il intervient sur au moins une partie du faisceau, des moyens de déplacement étant prévus pour faire passer le filtre de la position active à la position effacée ou inversement, le filtre étant un filtre diffusant et absorbant qui ne modifie pas sensiblement les longueurs d'onde de la lumière émergente par rapport à la lumière incidente, et étant prévu pour que, dans sa position active, un deuxième type de faisceau lumineux soit produit dont l'intensité est réduite et, éventuellement, la répartition photométrique est modifiée, le deuxième type de faisceau lumineux correspondant à la photométrie DRL lorsque ledit filtre est en position active, le projecteur ayant une surface éclairante au moins égale à celle nécessaire pour la fonction DRL.

L'évolution des exigences en matière de signalisation des véhicules automobiles engendre une augmentation des types de faisceau lumineux à produire selon les conditions de circulation. Pour éviter un nombre trop élevé de sources lumineuses différentes, il est connu de faire assurer, par un même projecteur, plusieurs fonctions correspondant à divers types de faisceau lumineux.

En particulier, FR 2 756 237 divulgue un projecteur " route " comportant au moins un filtre opaque au rayonnement visible mais transparent au rayonnement infrarouge. Ce projecteur permet d'assurer deux fonctions à savoir la fonction d'un projecteur "route" normal quand le filtre est en position effacée et la fonction de projecteur à rayonnement infrarouge lorsque le filtre est passé en position active. Le rayonnement infrarouge permet d'éclairer la route au-delà du champ des faisceaux de croisement pour donner au conducteur, à l'aide d'un ensemble caméra vidéo / écran de visualisation, une image infrarouge de la partie de route non éclairée par les faisceaux de croisement. Le projecteur proposé par FR 2 756 237 est relativement compliqué et fait intervenir d'une part un réflecteur de genre ellipsoïdal dont l'axe optique est orienté transversalement à l'axe longitudinal du véhicule et d'autre part un réflecteur de genre paraboloïdal dont l'axe optique est orienté suivant l'axe longitudinal du véhicule.

Il est aussi connu, notamment d'après EP 0 581 679, de réaliser un projecteur bifonction route-antibrouillard dans lequel une lampe de type " H4 " est décalée angulairement autour de son axe géométrique par rapport à la position qu'elle occupe habituellement dans un projecteur classique route-code.

Parmi les exigences de signalisation, le règlement sur les feux diurnes de la communauté européenne intitulé " ECE régulation R87 : Daytime Running Light ", désigné ci-après par l'abréviation DRL, pose problème en matière de réalisation.

Une première solution admise pour cette fonction DRL consiste à allumer en permanence les feux de croisement (code). La photométrie du feu de croisement, toléré comme feu " diurne ", n'est cependant pas la photométrie spécifique de la fonction DRL. En particulier, la photométrie du feu de croisement entraîne une consommation d'énergie supérieure à celle nécessaire pour la fonction DRL, et réduit la durée de vie des lampes.

Il est possible de prévoir un feu diurne DRL spécifique mais, dans ce cas, il faut ajouter à l'avant du véhicule une cavité respectant le règlement R87. Actuellement, la surface éclairante exigée pour la fonction DRL est de 40cm² et il n'est pas toujours aisé dans les véhicules modernes de trouver à l'avant un emplacement pour une telle surface éclairante.

La fonction antibrouillard est un autre exemple de fonction d'éclairage à assurer en plus des fonctions feux de route et de croisement.

L'invention a pour but, surtout, de fournir un projecteur de véhicule automobile qui, tout en restant d'une structure simple, permet de réaliser au moins deux fonctions, en particulier la fonction DRL et/ou la fonction antibrouillard.

Selon l'invention, un projecteur de véhicule automobile du genre défini précédemment est caractérisé par le fait que le filtre diffusant et absorbant est prévu pour que le deuxième type de faisceau lumineux, obtenu dans la position active du filtre, soit un faisceau antibrouillard.

De préférence le réflecteur est un réflecteur ellipsoïdal d'axe optique orienté suivant l'axe du véhicule, avec un foyer interne et un foyer externe, la source lumineuse est située au voisinage du foyer interne du réflecteur, et une lentille est située en avant du réflecteur, le foyer de la lentille étant voisin ou confondu avec le foyer externe du réflecteur. Le projecteur peut être prévu pour produire un faisceau lumineux de route lorsque la source est allumée et le filtre effacé.

Le filtre, dans sa position effacée, est situé dans la zone d'ombre du réflecteur ellipsoïdal, hors de la caustique par réflexion.

Le filtre diffusant et absorbant peut être constitué par une glace striée et dépolie assurant une absorption et un étalement suffisant du faisceau lumineux pour la fonction DRL. En particulier, la face arrière de la glace, tournée vers la source lumineuse, peut avoir subi un traitement de sablage.

A titre indicatif, non limitatif, l'intensité lumineuse suivant l'axe optique du projecteur est divisée au moins par dix, notamment par au moins quarante, lorsque le filtre diffusant et absorbant passe de la position effacée à la position active.

La glace constituant le filtre diffusant et absorbant peut comporter des pavés et/ou des segments toriques contribuant à la diffusion de la lumière.

Le projecteur peut comporter une alimentation en sous-voltage de la source lumineuse pour assurer la fonction DRL.

Le filtre est combiné avec un cache, déplacé avec le filtre et propre, en position active, à couper le faisceau au-dessus d'un plan horizontal. De préférence le cache est focalisé tandis que le filtre est défocalisé.

Le projecteur peut comporter au moins un autre filtre, notamment un filtre infrarouge modifiant les longueurs d'onde du faisceau lumineux émis et permettant ainsi d'assurer une troisième fonction.

L'invention consiste, mises à part les dispositions exposées ci-dessus, en un certain nombre d'autres dispositions dont il sera plus explicitement question ci-après à propos d'exemples de réalisation décrits avec référence aux dessins annexés, mais qui ne sont nullement limitatifs. Sur ces dessins :
Fig.1 est une coupe verticale axiale schématique d'un projecteur selon l'invention.
Fig.2 est une vue schématique de face à plus grande échelle du filtre diffusant et absorbant du réflecteur de Fig.1.
Fig.3 est une vue de la face arrière du filtre .
Fig.4 montre semblablement à Fig.1 une variante de réalisation du projecteur.
Fig.5 illustre la photométrie de la fonction route du projecteur.
Fig.6 illustre la photométrie de la fonction DRL, et
Fig.7 illustre la photométrie de la fonction antibrouillard.

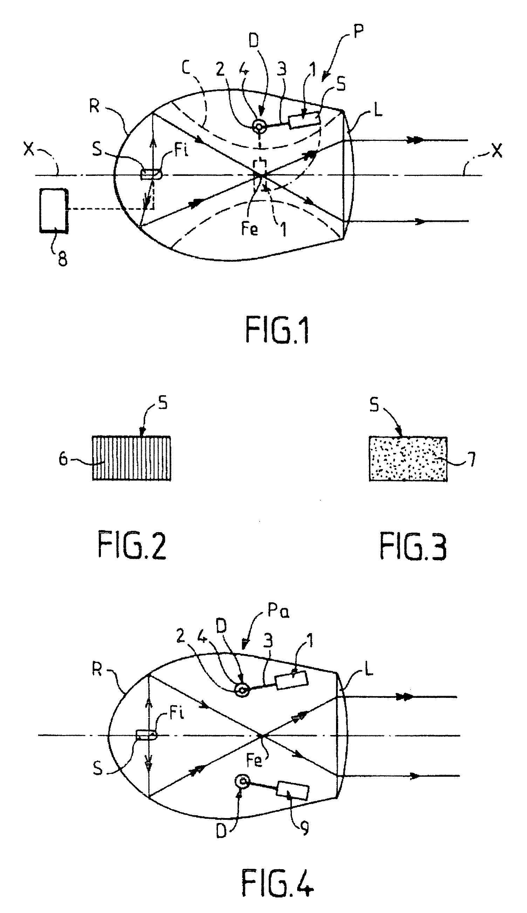

En se reportant à Fig.1 on peut voir un projecteur P de véhicule automobile comprenant un réflecteur R d'axe optique X-X orienté suivant l'axe longitudinal du véhicule, non représenté.

Le réflecteur R est de préférence constitué par un réflecteur ellipsoïdal ayant un foyer interne Fi et un foyer externe Fe. Une source lumineuse S, par exemple une lampe à filament ou une lampe à décharge, est située au voisinage du foyer interne Fi du réflecteur. Une lentille convergente L est située en avant (suivant le sens de propagation des rayons lumineux) du réflecteur R, le foyer de la lentille L étant voisin ou confondu avec le foyer externe Fe du réflecteur R. L'ensemble réflecteur R et lentille L constitue un module elliptique.

Lorsque la source S est allumée, le projecteur P fournit un faisceau lumineux de route. En variante, le projecteur P peut être prévu pour fournir un faisceau de croisement (code) .

Le projecteur P comporte un filtre 1 diffusant et absorbant qui peut occuper une première position effacée, représentée en traits pleins sur Fig.1 où il n'intervient pas sur le faisceau lumineux, et une deuxième position active représentée en tirets sur Fig.1. Dans cette position active, le filtre 1 intervient sur au moins une partie du faisceau pour produire un deuxième type de faisceau lumineux dont l'intensité est réduite et la répartition photométrique modifiée, les longueurs d'onde du faisceau étant essentiellement conservées.

Selon la réalisation de Fig.1, le filtre 1 est prévu pour que, dans sa position active, le faisceau lumineux sortant du projecteur P corresponde à la photométrie DRL, définie précédemment, le projecteur P ayant une surface éclairante au moins égale à celle nécessaire pour la fonction DRL. Actuellement, la surface éclairante exigée pour la fonction DRL étant de 40cm², il convient que la surface de la lentille L soit donc au moins égale à 40cm² , ce qui correspond à un diamètre de lentille d'au moins 7.2cm.

Dans sa position effacée, le filtre 1 est situé dans la zone d'ombre du réflecteur, en dehors de la caustique par réflexion C, ou surface enveloppe des rayons réfléchis.

Des moyens D sont prévus pour déplacer le filtre 1 de la position effacée à la position active ou inversement.

Selon la réalisation de Fig.1 le filtre 1 est mobile en rotation autour d'un axe horizontal 2 perpendiculaire au plan de la Figure 1, situé au-dessus de l'axe optique X-X. Le filtre 1 est porté par un bras 3 lié en rotation à l'axe 2. La commande du mouvement de rotation de l'axe 2 est assurée par un moteur électrique 4 schématiquement représenté.

Dans sa position active, le filtre 1 est situé de préférence au foyer ou au voisinage du foyer Fe, le plan moyen du filtre étant orthogonal à l'axe optique X-X.

En variante, le filtre 1 pourrait être porté par un bras articulé autour d'un axe horizontal situé au-dessous de l'axe optique X-X, ou bien autour d'un axe vertical, orthogonal à l'axe optique X-X et situé en avant ou en arrière du plan de Fig.1.

Selon une autre variante, le filtre 1 au lieu d'être mobile en rotation autour d'un axe pourrait être mobile en translation verticale, ou horizontale, orthogonale à l'axe X-X. Le moyen de déplacement D serait alors constitué par un actionneur commandant le mouvement de translation du filtre 1.

Ce filtre 1 peut être constitué par une glace 5, par exemple à contour rectangulaire dont la grande dimension en position active du filtre est horizontale, perpendiculaire au plan de Fig.1. La glace 5 est prévue pour assurer une absorption et un étalement suffisant du faisceau lumineux. Par exemple, la face avant de la glace 5 comporte des stries 6 verticales (Fig.2). On pourrait prévoir des segments toriques, ou des pavés délimités par des stries verticales et des stries horizontales.

La face arrière 7 (Fig.3) de la glace 5 peut être sablée pour assurer une diffusion et un étalement de la lumière aussi bien dans le plan horizontal que dans le plan vertical.

Le filtre 1 est suffisamment absorbant pour qu'à partir d'un faisceau lumineux route, dont l'intensité lumineuse suivant l'axe optique peut être d'au moins trente mille candelas, on obtienne avec le filtre 1 en position active un faisceau DRL satisfaisant dont l'intensité lumineuse suivant l'axe optique doit être inférieure ou égale à huit cents candelas.

Selon une variante, qui permet une économie d'énergie, la réduction de l'intensité lumineuse du faisceau DRL est obtenue en partie, ou totalement, par une alimentation électrique 8 assurant un sous-voltage de la source S. Le filtre 1 a alors principalement pour fonction d'étaler le faisceau lumineux et d'en absorber le moins possible.

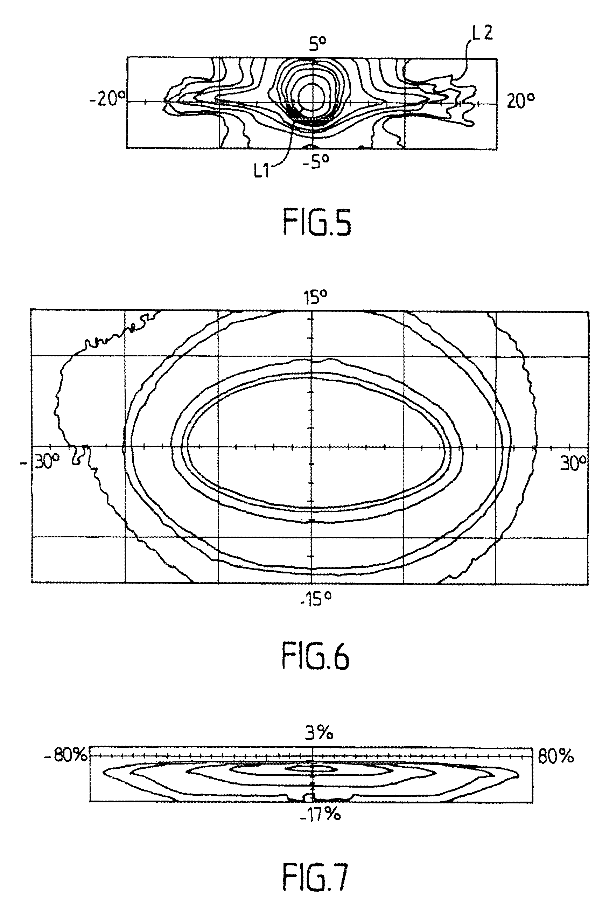

Fig.5 illustre la photométrie de la fonction route assurée par le projecteur P lorsque le filtre 1 est en position effacée et la source S allumée sous sa tension nominale. La photométrie de Fig.5 donne les courbes isolux sur un écran situé à 25 mètres du projecteur P et orthogonal à l'axe optique. La courbe centrale L1 correspond à un niveau de 48 lux et la courbe extérieure L2 à un niveau de 0.4 lux, les courbes intermédiaires correspondant à des niveaux d'éclairement qui diminuent progressivement du centre vers l'extérieur. L'axe horizontal correspond au plan horizontal passant par l'axe optique du réflecteur. Les graduations sur cet axe horizontal correspondent à l'angle formé entre l'axe optique et une direction horizontale passant par le foyer externe Fe et coupant l'écran au niveau de la graduation. L'axe vertical correspond à la trace du plan vertical passant par l'axe optique sur le plan de la photométrie et les graduations correspondent à l'angle formé entre l'axe optique et une direction située dans un plan vertical, passant par le foyer Fe et coupant le plan de photométrie à l'endroit de la graduation.

On voit d'après Fig.5 que, dans la fonction route, le faisceau est concentré suivant l'axe optique du projecteur avec un fort niveau d'éclairement pour des angles compris sensiblement entre ± 5° aussi bien horizontalement que verticalement.

Fig.6 montre la photométrie des courbes isolux obtenue avec le projecteur P de Fig.1 lorsque le filtre 1 est en position active pour assurer la fonction DRL. Les courbes centrales correspondent à un étalement d'environ ± 12° de part et d'autre de l'axe optique dans le plan horizontal et d'environ ± 8° dans le plan vertical, ce qui montre l'étalement du faisceau provoqué par le filtre 1. Le niveau d'éclairement est réduit par l'absorption du filtre 1 ou le sous-voltage de la source, de façon à satisfaire aux exigences de la fonction DRL.

Fig.4 illustre une variante de réalisation d'un projecteur Pa qui, en plus du filtre 1 de Fig.1, comporte un filtre infrarouge 9 qui peut être placé dans une position effacée, illustrée en trait plein sur Fig.4, ou dans une position active où il intercepte le faisceau lumineux pour ne laisser sortir qu'un faisceau infrarouge. Le montage du filtre 9 et le moyen de déplacement de ce filtre peuvent être semblables à ceux utilisés pour le filtre 1. Lorsque l'un des deux filtres 1 ou 9 est en position active, l'autre filtre 9 ou 1 est bloqué dans sa position effacée.

Les deux filtres 1 et 9 pourraient être montés sur un même bâti.

Le projecteur Pa peut ainsi assurer trois fonctions : la fonction route lorsque la source S est allumée sous tension nominale, avec les filtres 1 et 9 en position effacée ; la fonction DRL avec le filtre 1 en position active et, éventuellement, la source S alimentée en sous-voltage ; et la fonction projecteur infrarouge avec le filtre 9 infrarouge en position active et le filtre 1 en position effacée.

Jusqu'à présent, on a considéré un projecteur P, Pa, dans lequel le deuxième type de faisceau lumineux obtenu avec le filtre 1 en position active est un faisceau correspondant à la fonction DRL.

On peut envisager un projecteur lumineux dans lequel le deuxième type de faisceau lumineux est un faisceau antibrouillard avec la photométrie illustrée sur Fig.7, où les graduations en % portées sur les axes correspondent aux tangentes des angles d'inclinaison des rayons lumineux sur le plan vertical de photométrie. Le faisceau antibrouillard est coupé au-dessus d'un plan horizontal. Cette coupure peut être assurée par un cache opaque dont le déplacement est lié à celui du filtre 1. De préférence, le cache permettant d'assurer la coupure au-dessus du plan horizontal est focalisé, c'est-à-dire que dans sa position active il se trouve dans un plan perpendiculaire à l'axe optique et passant par le foyer externe du projecteur. Le filtre 1 peut être défocalisé et se trouver de préférence en arrière du foyer externe du réflecteur lorsqu'il est en position active.

Fig.7 fait apparaître un étalement plus grand des courbes isolux que lors de la fonction route illustrée par Fig.5. Le filtre 1 est prévu pour assurer cet étalement à partir du faisceau route de Fig.5. En outre, le niveau d'éclairement selon la photométrie de l'antibrouillard de Fig.7 est inférieur à celui de la fonction route.

L'invention permet de réaliser, à partir d'un projecteur route existant, une deuxième fonction, en particulier la fonction antibrouillard,

de manière simple dans une même cavité. Une troisième fonction, par exemple DRL ou IR (infrarouge), est en outre possible.

## Revendications

1. Projecteur de véhicule automobile comprenant un réflecteur (R) pour être orienté suivant l'axe longitudinal du véhicule, et une source lumineuse (S) située au voisinage du foyer du réflecteur de manière à produire un faisceau lumineux de type route, ou de croisement, lorsque la source est allumée, et au moins un filtre (1) pouvant occuper une première position effacée, où il n'intervient pas sur le faisceau lumineux, et une deuxième position active dans laquelle il intervient sur au moins une partie du faisceau, des moyens de déplacement (D) étant prévus pour faire passer le filtre de la position active à la position effacée ou inversement, le filtre (1) étant un filtre diffusant et absorbant qui ne modifie pas sensiblement les longueurs d'onde de la lumière émergente par rapport à la lumière incidente, et étant prévu pour que, dans sa position active, un deuxième type de faisceau lumineux soit produit dont l'intensité est réduite et, éventuellement, la répartition photométrique est modifiée, le deuxième type de faisceau lumineux correspondant à la photométrie DRL lorsque ledit filtre est en position active, le projecteur ayant une surface éclairante au moins égale à celle nécessaire pour la fonction DRL, **caractérisé par le fait que** le filtre diffusant et absorbant (1) est prévu pour que le deuxième type de faisceau lumineux, obtenu dans la position active du filtre, soit un faisceau antibrouillard.

2. Projecteur selon la revendication 1, **caractérisé par le fait que** le réflecteur (R) est un réflecteur ellipsoïdal d'axe optique orienté suivant l'axe du véhicule , avec un foyer interne (Fi) et un foyer externe (Fe), la source lumineuse (S) est située au voisinage du foyer interne (Fi) du réflecteur, et une lentille (L) est située en avant du réflecteur, le foyer de la lentille étant voisin ou confondu avec le foyer externe (Fe) du réflecteur.

3. Projecteur selon la revendication 2, **caractérisé par le fait que** le filtre (1), dans sa position effacée, est situé dans la zone d'ombre du réflecteur ellipsoïdal, hors de la caustique par réflexion (C).

4. Projecteur selon la revendication 1, **caractérisé par le fait que** le filtre diffusant et absorbant (1) est constitué par une glace striée et dépolie assurant une absorption et un étalement suffisant du faisceau lumineux pour la fonction DRL.

5. Projecteur selon la revendication 4, **caractérisé par le fait que** la face arrière (7) de la glace, tournée vers la source lumineuse (S), a subi un traitement de sablage.

6. Projecteur selon l'une des revendications 4 et 5, **caractérisé par le fait qu'**il comporte une alimentation (8) en sous-voltage de la source lumineuse (S) pour assurer la fonction DRL.

7. Projecteur selon la revendication 1, **caractérisé par le fait que** le filtre est combiné avec un cache, déplacé avec le filtre et propre, en position active, à couper le faisceau au-dessus d'un plan horizontal.

8. Projecteur selon l'une des revendications précédentes, **caractérisé par le fait qu'**il comporte au moins un autre filtre infrarouge (9) modifiant les longueurs d'onde du faisceau lumineux émis et permettant ainsi d'assurer une troisième fonction.
